# FASCICULE DE BREVET EUROPEEN

(11) **EP 1 429 167 B1**
(45) Date de publication et mention de la délivrance du brevet: **25.10.2006**
(21) Numéro de dépôt: 03300209.8
(22) Date de dépôt: 13.11.2003
(51) Int. Cl.: G02B 6/44, C03C 25/10

(54) **Procédé de fabrication d'un ruban à fibres optiques et ruban à fibres optiques**
Verfahren zur Herstellung eines optischen Faserbändchens und optisches Faserbändchen
Method of fabricating an optical fibre ribbon and optical fibre ribbon

(30) Priorité: 18.11.2002 FR 0214369
(43) Date de publication de la demande: 16.06.2004
(73) Titulaire: Nexans, 75008 Paris (FR)
(72) Inventeur: Pinto, Olivier, 69003 Lyon (FR); Fournier, Jérôme, 69003 Lyon (FR); Elisson, Peter, 50430 Boras (SE); Gunnarsson, Magnus, 51470 Grimsas (SE); Lanned, Mats, 51494 Sjötofta (SE)
(74) Mandataire: Feray, Valérie

(56) Documents cités:
- EP-A- 0 950 908
- EP-A- 1 216 969
- WO-A-01/75498
- WO-A-97/18493
- US-A- 5 442 722
- US-B1- 6 434 305

## Description

La présente invention se rapporte au domaine des câbles de télécommunications à fibres optiques et plus précisément concerne un procédé de fabrication d'un ruban à fibres optiques et un ruban à fibres optiques.

De manière connue, les rubans à fibres optiques sont utilisés dans des câbles de télécommunications pour les transmissions d'informations par voie optique.

Le document EP0950908 divulgue un ruban à fibres optiques comportant par exemple deux sous-unités disposées dans un plan commun, reliées l'une à l'autre et séparables pour faciliter leurs installations respectives dans des systèmes optiques.

Plus précisément, chaque sous-unité comporte un groupe de fibres optiques arrangées dans un plan, ce groupe étant revêtu d'une première matrice formant une première enveloppe et obtenue par irradiation d'une première résine liquide réticulée sous l'action de rayonnement UV. Les sous-unités sont reliées l'une à l'autre par une matrice formant une enveloppe commune et obtenue par irradiation d'une deuxième résine liquide réticulée sous l'action de rayonnement UV.

Le procédé de fabrication de ce ruban à fibres optiques comprend les étapes successives suivantes :
- une opération de formation de chaque sous-unité à fibres optiques comportant :
   - l'arrangement de N groupes de fibres optiques tel que les fibres d'un même groupe sont disposées dans un même plan,
   - l'application d'une première couche sur chaque groupe de fibres optiques de façon à les envelopper, chaque première couche étant en une première résine liquide réticulable sous l'action de rayonnement UV,
   - une irradiation des premières couches par rayonnement UV pour former des premières matrices réticulées,
   - une opération de formation du ruban comportant :

   - l'application d'une deuxième couche au-dessus des premières matrices pour former une enveloppe commune et relier les N sous-unités, cette deuxième couche étant en une résine réticulable par rayonnement UV,
   - une irradiation de la deuxième couche par rayonnement UV pour former une deuxième matrice réticulée.

La productivité de ce procédé de fabrication du ruban à fibres optiques est faible car ce procédé nécessite de multiples changements de machines et mises en places.

On connaît par ailleurs par le document WO 97/18493 un ruban de fibres optiques dont les fibres individuelles sont revêtues d'une résine durcissable sous l'action d'un rayonnement UV à l'aide d'un premier système initiateur, et dont la matrice est constituée d'une résine durcissable sous l'action d'un rayonnement UV à l'aide d'un deuxième système initiateur différent du premier.

Un objet de l'invention est la mise au point d'un procédé de fabrication d'un ruban à fibres optiques composé d'une pluralité de sous-unités munies d'enveloppes, disposées dans un plan, séparables et reliées entre elles par une matrice dite de liaison, procédé qui soit de productivité satisfaisante (réduction du temps et/ou du coût de fabrication du ruban) et de préférence simple à mettre en oeuvre.

L'invention propose à cet effet, dans un premier mode de réalisation, un procédé de fabrication d'un ruban à fibres optiques comportant un nombre N supérieur à 1 de sous-unités séparables et disposées dans un plan commun, le procédé comportant les étapes suivantes :
- l'arrangement de N groupes de fibres optiques tel que les fibres d'un même groupe sont disposées dans un même plan,
- l'application d'une première couche sur chaque groupe de fibres optiques pour former des premières enveloppes, chaque première couche étant en une première résine liquide durcissable sous l'action de rayonnement de type UV,
- une irradiation, dite première irradiation, des premières couches par rayonnement de type UV pour former des premières matrices,
- l'application d'une deuxième couche disposée pour relier entre elles les premières enveloppes adjacentes les unes aux autres, cette deuxième couche étant en une deuxième résine liquide durcissable sous l'action de rayonnement de type UV, lesdites premières et deuxième résines étant durcissables par une même voie chimique choisie parmi la voie radicalaire et la voie cationique, l'ensemble des fibres optiques étant disposées dans un plan commun,
- une irradiation, dite deuxième irradiation, de la deuxième couche par rayonnement de type UV pour former une deuxième matrice dite de liaison,
caractérisé en ce que lesdites première et deuxième irradiations correspondent à une unique étape d'irradiation, en ce que ladite application de la deuxième couche est réalisée avant ladite unique étape d'irradiation et en ce que le procédé comprend l'application d'une couche barrière entre chaque première couche et la deuxième couche.

Le procédé selon invention permet d'obtenir le ruban en une étape c'est-à-dire sans la fabrication préalable de chaque sous-unité. L'utilisation successive de plusieurs sources de rayonnement de type UV n'est plus nécessaire de sorte que la fabrication est plus rapide, moins onéreuse, et l'installation occupe moins de place.

Par « résine liquide durcissable » on entend aussi bien une résine à base d'oligomère et/ou de polymère réticulable qu'une résine à base d'oligomère et/ou de monomère polymérisable ou un mélange des deux.

En outre, dans le procédé en deux étapes principales de l'art antérieur, l'épaisseur de la première enveloppe est telle que les sous-unités ont une grande tenue mécanique avant leur encapsulation pour éviter leur détérioration. Le procédé selon l'invention présente l'avantage de permettre la fabrication de sous-unités dont la première enveloppe peut être d'épaisseur minimisée.

L'invention repose en outre sur l'idée que, si la deuxième résine liquide vient en contact d'une première résine liquide, il n'y a pas interdiffusion significative avant un délai s'exprimant en jour soit nettement supérieur aux quelques secondes nécessaires pour l'application de cette deuxième couche sur cette première couche.

Naturellement, les premières résines peuvent être identiques et correspondre à une seule première résine.

Le procédé selon l'invention, de préférence, est tel que la matrice de liaison est en un matériau qui n'est pas lié chimiquement avec l'une ou les matrices des enveloppes des sous-unités pour une meilleure pelabilité c'est-à-dire pour faciliter la séparation de la deuxième couche d'avec la première couche.

La couche barrière est en une composition choisie pour empêcher tout lien chimique de type covalent entre des groupes réactifs de chaque première couche et ceux de la deuxième couche. En outre, cette composition n'interdiffuse pas avec l'une des premières ou deuxième couches.

De préférence, la couche barrière peut être en une composition choisie parmi les polymères à base de siloxane, les résines oléfiniques, les huiles minérales, les alcools gras.

Et, dans un deuxième mode de réalisation, l'invention propose un procédé de fabrication d'un ruban à fibres optiques comportant un nombre N supérieur à 1 de sous-unités séparables et disposées dans un plan commun, le procédé comportant tes étapes suivantes :
- l'arrangement de N groupes de fibres optiques tel que les fibres - d'un même groupe sont disposées dans un même plan,
- l'application d'une première couche sur chaque groupe de fibres optiques pour former des première enveloppes, chaque première couche étant en une première résine liquide durcissable sous l'action de rayonnement de type UV,
- une irradiation, dite première irradiation, des premières couches par rayonnement de type UV pour former des premières matrices, l'application d'une deuxième couche disposée pour relier entre elles les premières enveloppes adjacentes les unes aux autres, cette deuxième couche étant en une deuxième résine liquide durcissable sous l'action de rayonnement de type UV, les premières résines étant durcissables par l'une des voies radicalaire ou cationique et la deuxième résine étant durcissable par l'autre des voles radicalaire ou cationique, l'ensemble des fibres optiques étant disposées dans un plan commun,
- une Irradiation, dite deuxième irradiation, de la deuxième couche par rayonnement de type UV pour former une deuxième matrice dite de liaison,
caractérisé en ce que lesdites première et deuxième irradiations correspondent à une unique étape d'irradiation et en ce que ladite application de la deuxième couche est réalisée avant ladite unique étape d'irradiation.

Pour une mise en oeuvre simple de ce procédé, on peut utiliser une seule filière de construction appropriée c'est-à-dire munie de deux chambres la première contenant une première résine et la deuxième la deuxième résine.

En outre, dans ce deuxième mode de réalisation, au moins l'une des premières ou deuxième résines peut contenir un agent de pelablité.

L'agent de pelabilité peut être choisi de préférence parmi les polymères à base de polysiloxane.

Selon une caractéristique, le procédé de fabrication selon l'invention peut comprendre le passage dudit ruban à fibres optiques dans un four infrarouge après ladite unique étape d'irradiation par rayonnement de type UV.

De préférence, l'une ou les résines durcissables par voie cationique peuvent contenir des composés à base d'oxirane tels que les éthers glycidyliques de bisphénol F ou A, les résines d'époxy novolaques ou cycloaliphatiques, les polymères d'époxysilicones, les oxétanes, les monomères éther vinyliques ou éther allyliques.

Cette résine peut aussi contenir des photoinitiateurs tels que des sels d'onium par exemple.

L'obtention des premières matrices ne fait pas intervenir le même processus chimique que celui pour l'obtention de la matrice de liaison. En d'autres termes, les groupements réactifs de chaque première résine ne sont pas susceptibles de réagir avec les groupements réactifs de la deuxième résine pour former un lien chimique de type covalent. La pelabilité de la matrice de liaison selon l'invention est donc satisfaisante : son retrait n'est pas susceptible de détériorer, par exemple par déchirement, l'enveloppe de chaque sous-unité.

Concernant la structure de la sous-unité obtenue selon l'invention, les fibres optiques d'un même groupe peuvent être en contact, pour une taille réduite de chaque sous-unité, ou espacées les unes des autres par la première enveloppe. En outre, les sous-unités adjacentes peuvent être en contact les unes avec les autres, pour une taille réduite du ruban, ou espacés par la matrice de liaison. Par ailleurs l'épaisseur de la première enveloppe peut être uniforme ou réduite de chaque côté de la sous-unité.

La matrice de liaison peut former une enveloppe commune à chacune des premières enveloppes pour une meilleure protection des sous-unités et une meilleure tenue mécanique de la sous-unité. L'épaisseur de l'enveloppe commune peut être uniforme ou réduite sur chaque côté de la sous-unité.

Les particularités et avantages de l'invention apparaîtront clairement à la lecture de la description qui suit, faite à titre d'exemples illustratifs et non limitatifs et faite en référence aux figures annexées dans lesquelles :
- la figure 1 représente schématiquement un ruban à fibres optiques dans un premier mode de réalisation préféré de l'invention,
- la figure 2 représente schématiquement un ruban à fibres optiques dans un deuxième mode de réalisation préféré de l'invention,
- la figure 3 représente schématiquement un ruban à fibres optiques dans un troisième mode de réalisation préféré de l'invention,
- la figure 4 représente schématiquement la mise en oeuvre d'un procédé de fabrication du ruban à fibres optiques de la figure 1, dans un premier mode de réalisation préféré de l'invention,
- la figure 5 représente schématiquement la mise en oeuvre d'un procédé de fabrication du ruban à fibres optiques de la figure 2, dans un deuxième mode de réalisation préféré de l'invention,
- la figure 6 représente schématiquement la mise en oeuvre d'un procédé de fabrication du ruban à fibres optiques de la figure 3 dans un troisième mode de réalisation préféré de l'invention.

Les éléments communs aux différents modes de réalisation de l'invention sont désignés par la même référence.

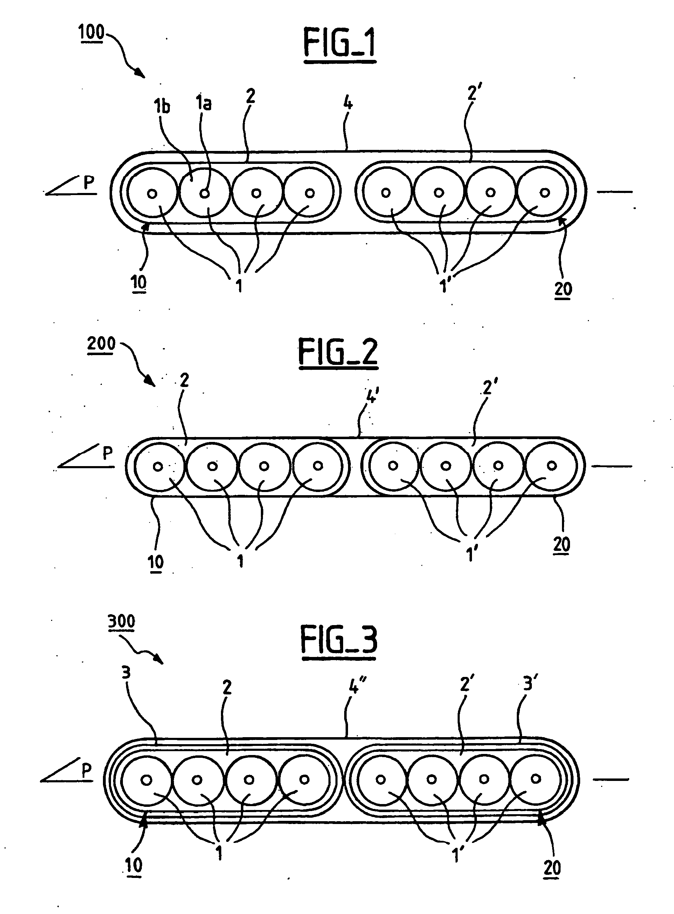

La figure 1 représente schématiquement un ruban à fibres optiques 100 dans un premier mode de réalisation préféré de l'invention.

Le ruban à fibres optiques 100 comporte par exemple deux sous-unités à fibres optiques 10, 20 disposées dans un plan commun P et séparables.

Chaque sous-unité 10, 20 comporte un groupe 1, 1' par exemple de quatre fibres optiques arrangées dans ledit plan P.

Chaque fibre optique est classiquement composée d'un coeur 1 a entouré d'une gaine 1 b colorée ou non pour repérer chaque fibre.

Chaque groupe de quatre fibres optiques 1, 1' est revêtu respectivement d'une première matrice 2, 2' sous forme d'une première enveloppe et obtenue de préférence par voie radicalaire, par irradiation d'une première résine liquide durcissable par rayonnement de type UV. Cette première résine dite résine A₁ est par exemple à base d'acrylate et correspond par exemple au produit CABLELITE® 950-706 de la société DSM Desotech.

Les premières matrices 2, 2' sont reliées entre elles par une matrice de liaison 4 formant de préférence une enveloppe commune à chacune des premières matrices 2, 2'. Cette matrice de liaison 4 est obtenue par voie cationique, par irradiation d'une deuxième résine liquide durcissable par rayonnement de type UV dite résine B₁.

La deuxième résine B₁ contient par exemple de composés d'oxirane et présente par exemple, la formulation suivante :
- 90 parts en poids de Cyracure UVR 6105 (société Union Carbide),
- 7,5 parts en poids de TONE 0301 (société Union Carbide),
- 1 part en poids d'un photoinitiateur tel que le Rhodorsil Photoinitiator 2074 (société Rhodia),
- 1 part en poids d'un agent de pelabilité de préférence à base de polysiloxane et par exemple durcissable sous l'action de rayonnement UV tel que le Silcolease UV POLY 205 (société Rhodia) qui contient un photoinitiateur et un polydiméthyl siloxane portant des fonctions époxy cycloaliphatiques,
- 0,5 parts en poids de Chloropropoxy thioxanthone (société FirstChem).

La figure 2 représente schématiquement un ruban à fibres optiques 200 dans un deuxième mode de réalisation préféré de l'invention.

Comme le ruban à fibres optiques 100, le ruban 200 comporte deux sous-unités à fibres optiques 10, 20 disposées dans un plan commun P et séparables. Chaque sous-unité 10, 20 comporte un groupe 1, 1' par exemple de quatre fibres optiques arrangées dans ledit plan P.

De même, chaque groupe de quatre fibres optiques 1, 1' est revêtu d'une première matrice 2, 2' formant une première enveloppe et obtenue de préférence par voie radicalaire, par irradiation d'une première résine liquide durcissable par rayonnement de type UV dite résine A₂ par exemple identique à la résine A₁.

A la différence du ruban à fibres optiques 100, les premières matrices 2, 2' sont reliées entre elles par une matrice de liaison 4' qui n'encapsule pas entièrement chacune des premières matrices 2, 2'.

Cette matrice de liaison 4' est obtenue par voie cationique, par irradiation d'une deuxième résine liquide durcissable par rayonnement de type UV dite résine B₂ par exemple identique à la résine B₁.

Les sous-unités 10, 20 sont présentées espacées l'une de l'autre mais peuvent être aussi bien en contact dans la mesure où elles sont séparables sans dommages.

La figure 3 représente schématiquement un ruban à fibres optiques 300 dans un troisième mode de réalisation préféré de l'invention.

Comme le ruban à fibres optiques 100, le ruban 300 comporte deux sous-unités à fibres optiques 10, 20 disposées dans un plan commun P et séparables. Chaque sous-unité 10, 20 comporte un groupe 1, 1' par exemple de quatre fibres optiques arrangées dans ledit plan P.

De même, chaque groupe de quatre fibres optiques 1, 1' est revêtu d'une première matrice 2, 2' formant une première enveloppe et obtenue de préférence par voie radicalaire, par irradiation d'une première résine liquide durcissable par rayonnement de type UV dite résine A₃ par exemple identique à la résine A₁.

Les premières matrices 2, 2' sont reliées entre elles par une matrice de liaison 4" obtenue par voie radicalaire, par irradiation d'une deuxième résine liquide durcissable par rayonnement de type UV dite résine B₃ par exemple identique à la résine A₃.

A la différence du ruban à fibres optiques 100, la matrice de liaison 4" et chaque première matrice 2, 2' sont séparées par une couche barrière 3, 3' en une composition dite C, couche nécessaire dans la mesure où les résines A₃ et B₃ durcissent par la même voie.

La composition liquide C est réactive ou non au rayonnement UV et est choisie par exemple parmi les polymères à base de siloxane, les résines oléfiniques, les huiles minérales et les alcools gras.

Par exemple, pour des résines A₃, B₃ durcissables par voie radicalaire on peut choisir une composition C durcissable par voie cationique sous l'action de rayonnement UV telle que le Silcolease UV POLY 205 (société Rhodia) ou une composition non durcissable sous l'action de rayonnement UV telle qu'un polymère diméthyl siloxane comme le Rhodorsil 47V350 (société Rhodia).

Dans une variante, les résines A₃, B₃ sont obtenues par la même voie cationique. Dans cette variante, on peut choisir une composition non durcissable C sous l'action de rayonnement UV telle que le Rhodorsil 47V350 ou une composition durcissable par voie radicalaire sous l'action de rayonnement UV par exemple de formulation suivante :
- 70 parties en poids d'un polydiméthyl siloxane portant des groupements acrylates, par exemple le produit Tego RC 902 (société Th. Goldschmidt AG),
- 30 parties en poids d'un autre polydiméthyl siloxane portant des groupements acrylates, par exemple le produit Tego RC 711 (société Th. Goldschmidt AG),
- 3 parties en poids d'un photoinitiateur tel que le produit Esacure KIP100F (société Lamberti S.p.A.).

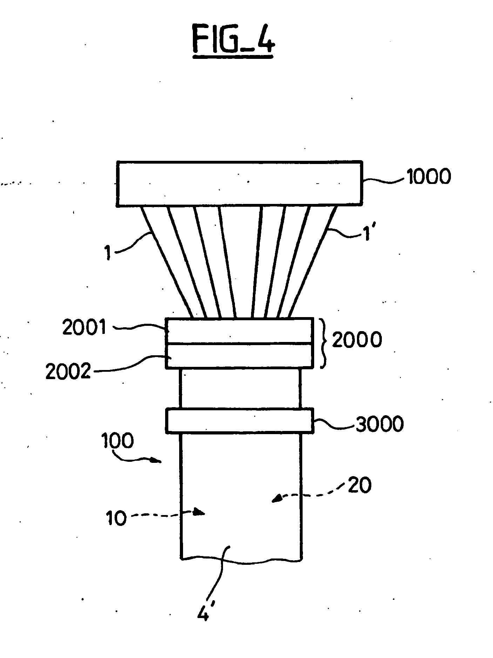

La figure 4 représente schématiquement la mise en oeuvre d'un procédé de fabrication du ruban à fibres optiques de la figure 1 dans un premier mode de réalisation préféré de l'invention.

La vue de l'ensemble de dispositifs mis en oeuvre est de côté.

Le procédé comprend d'abord l'arrangement des deux groupes de quatre fibres optiques 1, 1' issues d'une station de dévidage 1000, arrangement tel que toutes les fibres optiques sont disposées dans le plan commun P.

Ensuite, les deux groupes de quatre fibres optiques 1, 1' passent dans une filière 2000 dotée de deux chambres successives 2001, 2002 respectivement et comprenant l'une la première résine liquide A₁, l'autre la deuxième résine B₁. En sortie de la première chambre 2001, chacun des deux groupes de fibres optiques est enveloppé par une première couche en la première résine A₁. Les premières couches ne sont pas en contact l'une avec l'autre.

En sortie de la deuxième chambre 2002, une deuxième couche en la deuxième résine B₁ enveloppe chacune des premières couches et les relie entre elles.

Enfin, une unique étape d'irradiation par une source 3000 de rayonnement de type UV des premières coucheset de la deuxième couche permet respectivement de former les premières matrices des deux sous-unités (non visibles)et la matrice de liaison 4 sous forme d'enveloppe commune du ruban 100.

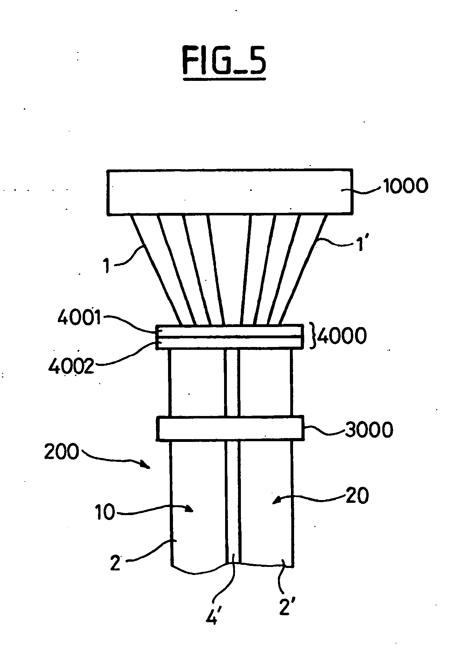

La figure 5 représente schématiquement la mise en oeuvre d'un procédé de fabrication du ruban à fibres optiques de la figure 2 dans un deuxième mode de réalisation préféré de l'invention.

La vue de l'ensemble de dispositifs mis en oeuvre est de côté.

Les deux groupes de quatre fibres optiques 1, 1' passent dans une filière 4000 dotée de deux chambres successives 4001, 4002 respectivement et comprenant l'une la première résine A₂ liquide, l'autre la deuxième résine B₂. En sortie de la première chambre 4001, chacun des deux groupes de fibres optiques est enveloppé par une première couche en la première résine A₂. De préférence, ces premières couches ne sont pas en contact l'une avec l'autre. En sortie de la deuxième chambre 4002, une deuxième couche en la deuxième résine B₂ est disposée pour relier entre elles les deux premières couches sans les envelopper.

Enfin, une unique étape d'irradiation par une source 3000 de rayonnement de type UV des premières couches et de la deuxième couche permet respectivement de former les premières matrices 2, 2' des deux sous-unités 10, 20 et la matrice de liaison 4' du ruban 200.

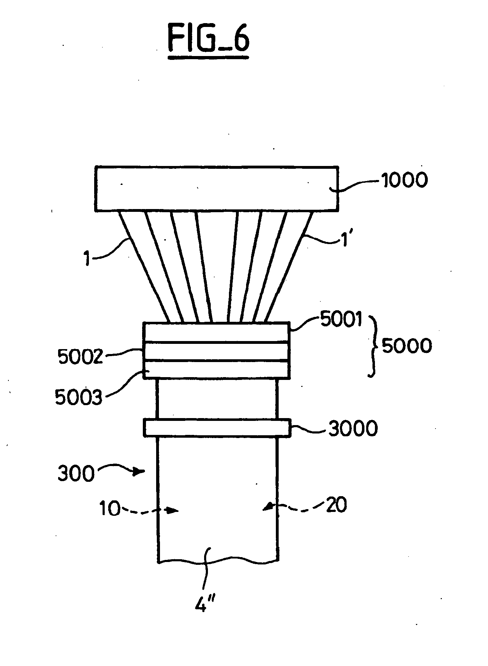

La figure 6 représente schématiquement la mise en oeuvre d'un procédé de fabrication du ruban à fibres optiques de la figure 3 dans un troisième mode de réalisation préféré de l'invention.

La vue de l'ensemble de dispositifs mis en oeuvre est de côté.

Les deux groupes de quatre fibres optiques 1, 1' passent dans une filière 5000 dotée de trois chambres successives 5001, 5002, 5003 respectivement et comprenant pour la première la première résine liquide A₃, pour la deuxième la composition liquide C, pour la troisième la deuxième résine liquide B₃.

En sortie de la première chambre 5001, chacun des deux groupes de fibres optiques est enveloppé par une première couche en la première résine A₃. Les premières couches ne sont en contact l'une avec l'autre de préférence.

En sortie de la deuxième chambre 5002, une couche barrière en la composition C recouvre chaque première couche.

En sortie de la troisième chambre 5003, une deuxième couche en la deuxième résine B₃ enveloppe chacune des premières couches et les relie entre elles.

Enfin, une unique étape d'irradiation par une source 3000 de rayonnement de type UV des premières couches, de la couche barrière et de la deuxième couche permet respectivement de former les premières matrices des deux sous-unités (non visibles), la couche barrière et la matrice de liaison 4 sous formé d'enveloppe commune du ruban 300.

La couche barrière qui limite la formation de lien chimique covalent entre chaque première couche et la deuxième couche peut aussi bien rester liquide ou se durcir ceci en fonction du choix de la composition C.

Dans une variante (non représentée) de l'un des modes de réalisation présentés dans les figures 4 à 6, après l'étape d'irradiation de type UV est prévu le passage du ruban à fibres optiques dans un four infrarouge pour améliorer si nécessaire le degré de polymérisation notamment des matrices obtenues par voie cationique.

## Revendications

1. Procédé de fabrication d'un ruban à fibres optiques (100, 200, 300) comportant un nombre N supérieur à 1 de sous-unités (10, 20) séparables et disposées dans un plan commun, le procédé comportant les étapes suivantes :
- l'arrangement de N groupes de fibres optiques (1, 1') tel que les fibres d'un même groupe sont disposées dans un même plan (P),
- l'application d'une première couche (2, 2') sur chaque groupe de fibres optiques pour former des premières enveloppes, chaque première couche étant en une première résine liquide durcissable sous l'action de rayonnement de type UV,
- une irradiation, dite première irradiation, des premières couches par rayonnement de type UV pour former des premières matrices,
- l'application d'une deuxième couche (4, 4', 4") disposée pour relier entre elles les premières enveloppes adjacentes les unes aux autres (2, 2'), cette deuxième couche étant en une deuxième résine liquide durcissable sous l'action de rayonnement de type UV, lesdites premières et deuxième résines étant durcissables par une même voie chimique choisie parmi la voie radicalaire et la voie cationique, l'ensemble des fibres optiques étant disposées dans un plan commun (P),
- une irradiation, dite deuxième irradiation, de la deuxième couche (4, 4', 4") par rayonnement de type UV pour former une deuxième matrice dite de liaison,
**caractérisé en ce que** lesdites première et deuxième irradiations correspondent à une unique étape d'irradiation, **en ce que** ladite application de la deuxième couche est réalisée avant ladite unique étape d'irradiation et **en ce que** ledit procédé comprend l'application d'une couche barrière (3, 3') entre chaque première couche (2, 2') et la deuxième couche (4").

2. Procédé de fabrication d'un ruban à fibres optiques selon la revendication 1 **caractérisé en ce que**, ladite couche barrière (3, 3') est en une composition choisie parmi les polymères à base de siloxane, les résines oléfiniques, les huiles minérales et les alcools gras.

3. Procédé de fabrication d'un ruban à fibres optiques (100, 200, 300) comportant un nombre N supérieur à 1 de sous-unités (10, 20) séparables et disposées dans un plan commun, le procédé comportant les étapes suivantes :
- l'arrangement de N groupes de fibres optiques (1, 1') tel que les fibres d'un même groupe sont disposées dans un même plan (P),
- l'application d'une première couche (2, 2') sur chaque groupe de fibres optiques pour former des premières enveloppes, chaque première couche étant en une première résine liquide durcissable sous l'action de rayonnement de type UV,
- une irradiation, dite première irradiation, des premières couches par rayonnement de type UV pour former des premières matrice,
- l'application d'une deuxième couche (4, 4', 4") disposée pour relier entre elles les premières enveloppes adjacentes les unes aux autres (2, 2'), cette deuxième couche étant en une deuxième résine liquide durcissable sous l'action de rayonnement de type UV, les premières résines étant durcissables par l'une des voies radicalaire ou cationique et la deuxième résine étant durcissable par l'autre des voies radicalaire ou cationique, l'ensemble des fibres optiques étant disposées dans un plan commun (P),
- une irradiation, dite deuxième irradiation, de la deuxième couche (4, 4', 4") par rayonnement de type UV pour former une deuxième matrice dite de liaison,
**caractérisé en ce que** lesdites première et deuxième irradiations correspondent à une unique étape d'irradiation, et **en ce que** ladite application de la deuxième couche est réalisée avant ladite unique étape d'irradiation.

4. Procédé de fabrication d'un ruban à fibres optiques (100, 200) selon la revendication 3 **caractérisé en ce qu'**au moins l'une des premières ou deuxième résines contient un agent de pelabilité.

5. Procédé de fabrication d'un ruban à fibres optiques (100, 200) selon la revendication 4 **caractérisé en ce que** l'agent de pelabilité est choisi de préférence parmi les polymères à base de polysiloxane.

6. Procédé de fabrication d'un ruban à fibres optiques selon l'une des revendications 1 à 5 **caractérisé en ce qu'**il comprend le passage dudit ruban à fibres optiques dans un four infrarouge après ladite unique étape d'irradiation par rayonnement de type UV.

7. Procédé de fabrication d'un ruban à fibres optiques (100, 200) selon l'une des revendications 1 à 6 **caractérisé en ce que** l'une ou les résines durcissables par voie cationique contiennent des composés à base d'oxirane tels que les éthers glycidyliques de bisphénol F ou A, les résines d'époxy novolaques ou cycloaliphatiques, les polymères d'époxysilicones, les oxétanes, les monomères éther vinyliques ou éther allyliques.

## Claims

1. A method for making a strip with optical fibers (100, 200, 300) including a number N larger than 1 of separable subunits (10, 20) and positioned in a common plane, the method including the following steps:
- arrangement of N groups of optical fibers (1, 1') so that the fibers of a same group are positioned in a same plane (P),
- application of a first layer (2, 2') on each group of optical fibers in order to form first envelopes, each first layer being in a first liquid resin curable under the action of UV type radiation,
- irradiation, a so-called first irradiation, of the first layers by UV type radiation in order to form first matrices,
- application of a second layer (4, 4', 4") positioned in order to connect together the first envelopes adjacent to each other (2, 2'), this second layer being in a second liquid resin curable under the action of UV type radiation, said first and second resins being curable via a same chemical route selected from the radical route and the cationic route, the assembly of the optical fibers being positioned in a common plane (P),
- irradiation, a so-called second irradiation, of the second layer (4, 4', 4''') by UV type radiation in order to form a second so-called connecting matrix,
**characterized in that** said first and second irradiations correspond to a single irradiation step, **in that** said application of the second layer is achieved before said single irradiation step and **in that** said method comprises the application of a barrier layer (3, 3') between each first layer (2, 2') and the second layer (4").

2. The method for making a strip with optical fibers according to claim 1, **characterized in that** said barrier layer (3, 3') is in a composition selected from siloxane-based polymers, olefin resins, mineral oils and fatty alcohols.

3. A method for making a strip with optical fibers (100, 200, 300) including a number N larger than 1 of separable subunits (10, 20) positioned in a common plane, the method including the following steps:
- arrangement of N groups of optical fibers (1, 1') such that the fibers of a same group are positioned in a same plane (P),
- application of a first layer (2, 2') on each group of optical fibers in order to form first envelopes, each first layer being in a first liquid resin curable under the action of UV type radiation,
- irradiation, a so-called first irradiation, of the first layers by UV type radiation in order to form first matrices,
- application of a second layer (4, 4', 4") positioned for connecting together the first envelopes adjacent to each other (2, 2'), this second layer being in a second liquid resin curable under the action of UV type radiation, the first resins being curable via one of the radical or cationic routes and the second resin being curable via the other one of the radical or cationic routes, the assembly of the optical fibers being positioned in a common plane (P),
- irradiation, a so-called second irradiation, of the second layer (4, 4', 4") by UV type radiation in order to form a second so-called connecting matrix,
**characterized in that** said first and second irradiations correspond to a single irradiation step, and **in that** said application of the second layer is achieved before said single irradiation step.

4. The method for making a strip with optical fibers (100, 200) according to claim 3, **characterized in that** at least one of the first or second resins contains a peelability agent.

5. The method for making a strip with optical fibers (100, 200) according to claim 4, **characterized in that** the peelability agent is preferably selected from polysiloxane-based polymers.

6. The method for making a strip with optical fibers according to any of claims 1 to 5, **characterized in that** it comprises the passage of said strip with optical fibers in an infrared oven after said single step of irradiation by UV type radiation.

7. The method for making a strip with optical fibers (100, 200) according to any of claims 1 to 6, **characterized in that** one resin or the resins curable via a cationic route contain oxirane-based compounds such as glycidyl ethers of bisphenol F or A, novolac or cycloaliphatic epoxy resins, epoxy silicone polymers, oxetanes, vinyl ether or allyl ether monomers.

## Patentansprüche

1. Verfahren zur Herstellung eines optischen Faserbändchens (100, 200, 300) mit einer Anzahl N größer 1 an Untereinheiten (10, 20), die abtrennbar und in einer gemeinsamen Ebene angeordnet sind, wobei das Verfahren die folgenden Schritte aufweist:
- die Anordnung von N Gruppen optischer Fasern (1, 1'), so dass die Fasern derselben Gruppe in derselben Ebene (P) angeordnet sind,
- die Anwendung einer ersten Schicht (2, 2') auf jede Gruppe optischer Fasern zur Bildung erster Hüllen, wobei jede erste Schicht unter der Wirkung von UV-Strahlung aus einer ersten härtbaren Flüssigharzschicht besteht,
- eine als erste Bestrahlung bezeichnete Bestrahlung erster Schichten durch UV-Strahlung zur Bildung erster Matrizen,
- die Anwendung einer zweiten Schicht (4, 4', 4''), die derart angeordnet ist, dass die ersten, aneinanderangrenzenden Hüllen (2, 2') miteinander verbunden werden, wobei diese zweite Schicht unter der Wirkung von UV-Strahlung aus einer zweiten härtbaren Flüssigharzschicht besteht, und das erste und zweite Harz durch denselben chemischen Vorgang gehärtet werden kann, der unter dem radikalischen Verfahren oder dem Kationenverfahren ausgewählt wird, wobei die Gesamtheit der optischen Fasern in einer gemeinsamen Ebene (P) angeordnet wird,
- eine als zweite Bestrahlung bezeichnete Bestrahlung der zweiten Schicht (4, 4', 4' ') durch UV-Strahlung zur Bildung einer zweiten sogenannten Verbindungsmatrize,
**dadurch gekennzeichnet, dass** die erste und zweite Bestrahlung einer einzigen Bestrahlungsstufe entspricht, indem die Anwendung der zweiten Schicht vor der einzigen Bestrahlungsstufe durchgeführt wird, und dass das Verfahren die Anwendung einer Sperrschicht (3, 3') zwischen jeder ersten Schicht (2, 2') und der zweiten Schicht (4' ') beinhaltet.

2. Verfahren zur Herstellung eines optischen Faserbändchens nach Anspruch 1, **dadurch gekennzeichnet, dass** die Sperrschicht (3, 3') aus einer Zusammensetzung von Polymeren auf Siloxanbasis, Olefinharzen, Mineralölen und Fettalkoholen besteht.

3. Verfahren zur Herstellung eines optischen Faserbändchens (100, 200, 300) mit einer Anzahl N größer 1 an Untereinheiten (10, 20), die abtrennbar und in einer gemeinsamen Ebene angeordnet sind, wobei das Verfahren die folgenden Schritte aufweist:
- die Anordnung von N Gruppen optischer Fasern (1, 1'), so dass die Fasern derselben Gruppe in derselben Ebene (P) angeordnet sind,
- die Anwendung einer ersten Schicht (2, 2') auf jede Gruppe optischer Fasern zur Bildung erster Hüllen, wobei jede erste Schicht unter der Wirkung von UV-Strahlung aus einer ersten härtbaren Flüssigharzschicht besteht,
- eine als erste Bestrahlung bezeichnete Bestrahlung erster Schichten durch UV-Strahlung zur Bildung erster Matrizen,
- die Anwendung einer zweiten Schicht (4, 4', 4''), die derart angeordnet ist, dass die ersten, aneinanderangrenzenden Hüllen (2, 2') miteinander verbunden werden, wobei diese zweite Schicht unter der Wirkung von UV-Strahlung aus einer zweiten härtbaren Flüssigharzschicht besteht, und das erste Harz durch das radikalische Verfahren oder das Kationenverfahren gehärtet werden kann, und das zweite Harz durch das radikalische Verfahren oder das Kationenverfahren gehärtet werden kann, wobei die Gesamtheit der optischen Fasern in einer gemeinsamen Ebene (P) angeordnet wird,
- eine als zweite Bestrahlung bezeichnete Bestrahlung der zweiten Schicht (4, 4', 4'') durch UV-Strahlung zur Bildung einer zweiten, sogenannten Verbindungsmatrize,
**dadurch gekennzeichnet, dass** die erste und zweite Bestrahlung einer einzigen Bestrahlungsstufe entspricht, und dass die Anwendung der zweiten Schicht vor der einzigen Bestrahlungsstufe durchgeführt wird.

4. Verfahren zur Herstellung eines optischen Faserbändchens (100, 200) nach Anspruch 3, **dadurch gekennzeichnet, dass** mindestens eines des ersten oder zweiten Harzes ein Abziehmittel enthält.

5. Verfahren zur Herstellung eines optischen Faserbändchens (100, 200) nach Anspruch 4, **dadurch gekennzeichnet, dass** das Abziehmittel vorzugsweise unter den Polymeren auf Polysiloxanbasis ausgewählt wird.

6. Verfahren zur Herstellung eines optischen Faserbändchens nach Anspruch 1 bis 5, **dadurch gekennzeichnet, dass** das Faserbändchen nach der einzigen Bestrahlungsstufe durch UV-Strahlung einen Infrarot-Ofen durchläuft.

7. Verfahren zur Herstellung eines optischen Faserbändchens (100, 200) nach einem der Ansprüche 1 bis 6, **dadurch gekennzeichnet, dass** eines der durch Kationenverfahren härtbaren Harze oder die durch Kationenverfahren härtbaren Harze Verbindungen auf Oxiranbasis enthalten wie Bisphenol-Glycidyläther F oder A, Novolak-Epoxydharze oder cycloaliphatische Epoxydharze, Epoxysilikon-Polymere, Oxetane, Vinyläther-Monomere oder Allyläther-Monomere.
